# EUROPÄISCHE PATENTANMELDUNG

(11) **EP 2 388 145 A1**
(43) Veröffentlichungstag der Anmeldung: **23.11.2011**
(21) Anmeldenummer: 10163411.1
(22) Anmeldetag: 20.05.2010
(51) Int. Cl.: B41M 5/26, G02B 7/18

(54) **Umlenkspiegeleinheit und Vorrichtung zur Laserbeschriftung mit einer solchen Umlenkeinheit**

(71) Anmelder: NanoSec Gesellschaft für Nanotechnologie in der Sicherheitstechnik mbH, 64297 Darmstadt (DE)
(72) Erfinder: Kreuter, Rüdiger, 64297 Darmstadt (DE)
(74) Vertreter: Alber, Norbert

(57) **Zusammenfassung**

Um beispielsweise in einer Laserbeschriftungseinheit trotz lotrechten Auftreffens des Laserstrahls (10) auf der zu beschriftenden Karte das Gesamtgerät kompakt zu halten, sind relativ viele Strahlumlenkungen, teilweise über fest zueinander angeordnete Spiegel, notwendig. Um Montage- und Justierungsaufwand zu minimieren, werden mehrere Strahlumlenkungen hintereinander mittels eines Prismenkörpers (101) bewirkt, an dem dies mittels einzelner Reflektionsflächen (6, 7, 8) realisiert wird. Der Prismenkörper (101) ist in einer Prismenfassung (102) aufgenommen, die zum Zwecke der Montage und Justierung im Ganzen verkippt und gedreht werden kann.

## Beschreibung

### I. Anwendungsgebiet

Die Erfindung betrifft eine Umlenkspiegeleinheit für drei optische Strahlumlenkungen eines Laserstrahls sowie die Laserbeschriftung von kartenähnlichen Substraten, beispielsweise Ausweiskarten, Kreditkarten, Scheckkarten und ähnlichen flachen, ebenen Gebilden mit zwei parallel zueinander verlaufenden Hauptflächen, von denen mindestens eine beschriftet werden soll, bei denen die vorerwähnte Umlenkspiegeleinheit eingesetzt wird.

### II. Technischer Hintergrund

Das Beschriften von insbesondere aus Kunststoff bestehenden Karten mittels Laser ist allgemein üblich, da durch die Energie der Laserstrahlung eine Karbonisierung und damit Schwärzung der Kohlenstoffverbindungen des Substrates und damit eine dauerhafte Einfärbung mit Tiefenwirkung ins Basismaterial erfolgt.

Die Einfärbung kann auch durch Absorption des Laserlichts durch das Substrat oder Anteile des Substrats wie etwa eingebettete Farbstoffe etc. erfolgen oder das Sprengen von verkapselten Pigmenten.

Je nach Energie des Laserlichts und Positionierung des Brennpunktes kann die Beschriftungswirkung an der Oberfläche oder auch in der Tiefe des Substrates erfolgen, wobei letzteres in der Regel nur dann angewandt wird, wenn sich oberhalb der beeinflussten Schicht eine zumindest für die Laserstrahlung transparente Deckschicht befindet, damit die durch den Laser erfolgte Farbveränderung - die eine Beschriftung ebenso sein kann wie eine Bilddarstellung - mit bloßem Auge erkennbar ist.

Da solche Karten meist in großer Stückzahl beschriftet werden müssen und mit dem Laserstrahl Pixel für Pixel auf der Karte die Farbveränderung erzeugt werden muss, ist in bisherigen Beschriftungsvorrichtungen in der Regel die Laserapertur, insbesondere Laserquelle, lotrecht zur Hauptebene der zu beschriftenden Karte angeordnet und der Strahl wird mittels beweglicher Umlenkspiegel in X- und Y-Richtung der Hauptebene der Karte so abgelenkt, dass die gewünschte Beschriftung auf der dabei still stehenden Karte erzielt wird.

Da die entsprechenden Umlenkspiegel oder Polygonspiegel - je weiter sie von der zu beschriftenden Karte entfernt sind - dabei nur über sehr kleine Winkel und damit Bewegungswege gedreht werden müssen, kann dieses Bewegen der Umlenkspiegel und damit das Beschriften der Karte insgesamt sehr schnell erfolgen.

Daraus resultiert jedoch eine relativ große Gesamtabmessung der Laserbeschriftungsvorrichtung.

Falls die Karte darüber hinaus auf beiden Seiten mittels Laser beschriftet werden soll, muss entweder die Karte für die Beschriftung der Rückseite umgedreht und erneut in die Vorrichtung eingelegt werden, oder die ohnehin bereits hoch bauende Vorrichtung ist redundant doppelt aufgebaut für Beschriftung der Ober- und Unterseite und besitzt dadurch eine nochmals verdoppelte Baugröße.

Will man jedoch eine Laserbeschriftungsvorrichtung bauen, die trotz einfachem und kostengünstigen Aufbau geringe Abmessungen besitzt und dennoch eine schnelle Beschriftung erlaubt, so wird zum einen der Laserstrahl auf der sich in X- und Y-Richtung erstreckenden Hauptebene der Karte lediglich in einer Richtung , z. B. in Y-Richtung, oszillierend mittels eines Fächerspiegels hin und her geführt, während die andere, z. B. die X-Richtung vorzugsweise durch Bewegen der Karte in einem Kartenschlitten oder durch Strahlablenkung über einen optischen Schlitten realisiert ist.

Wenn dabei die Laserquelle den Laserstrahl in einer Richtung parallel und insbesondere auf der Hauptebene der Karte abgibt, kann mittels eines umschaltbaren Auswahlspiegels der Laserstrahl wahlweise in den Bereich oberhalb oder unterhalb der Hauptebene der Karte geleitet und damit die Karte wahlweise einmal von oben und das andere mal von unten beschriftet werden.

Unabhängig davon ist bei Abgabe des Laserstrahls in einer Richtung parallel zur Hauptebene der Karte wenigstens ein stillstehender Umlenkspiegel vorhanden, bei Anordnung des Laserstrahls auf der Kartenebene und in Bewegungsrichtung des Kartenschlittens sogar drei feststehende Umlenkspiegel auf jeder Seite der Hauptebene des Kartenschlittens notwendig, von der her eine Beschriftung erfolgen soll.

Da die korrekte Einstellung dieser z. B. je drei feststehenden Umlenkspiegel maßgeblich für ein richtig positioniertes Beschriften der Karten mittels Laserstrahl ist, müssen diese Umlenkspiegel sowohl beim Bau der Beschriftungsvorrichtung sehr exakt justiert werden als auch bei sich ändernden Umgebungsbedingungen, beispielsweise Temperaturänderungen, auch nachjustiert werden.

Bei drei festen Umlenkspiegeln oberhalb und drei festen Umlenkspiegeln unterhalb der Hauptebene ist dieser Justieraufwand sehr hoch und eine korrekte Einstellung erfordert viel Zeit und Sachverstand.

### III. Darstellung der Erfindung

### a) Technische Aufgabe

Es ist daher die Aufgabe gemäß der Erfindung, eine Umlenkspiegeleinheit sowie eine Laserbeschriftungsvorrichtung mit einer solchen Umlenkspiegel-einheit zu schaffen, die einfach und kostengünstig herzustellen sind und vor allem die Justierung der festen Umlenkspiegel vereinfachen.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Es hat sich gezeigt, dass durch Anordnung der drei Umlenkebenen bei der dreifachen Strahlumlenkung in einem Winkel zueinander, dem sogenannten Klappwinkel, der insbesondere 90° beträgt, der Austrittswinkel des Laserstrahls von einer Verkippung des Prismenkörpers um die X-, Y- oder Z-Achse teilweise unabhängig ist und nur vom Eintrittswinkel in den Prismenkörper abhängt.

Auch die Richtung der Flächennormale des Strahlfächers ist von einer Verdrehung des Prismenkörpers unabhängig.

Deshalb wird erfindungsgemäß vorgeschlagen, die drei Reflektionsflächen für die drei Umlenkungen fest und unveränderbar relativ zueinander zu positionieren, beispielsweise an einem einzigen Prismenkörper als Totalreflektionsflächen anzuordnen.

Dadurch kann man zwar nur noch diesen Prismen körper insgesamt in seiner Lage relativ zur Umgebung, beispielsweise einem aufnehmenden Gehäuse, verstellen, jedoch ist dies aufgrund der teilweisen Kompensation von Winkelfehlern innerhalb der drei Umlenkungen ausreichend.

Im Gegenzug wird dadurch der Justageaufwand drastisch verringert.

Eine erste Justage des Prismas beim Aufbau des Gerätes ist notwendig, um die Reflektionsflächen mit einem nicht ausgelenkten mittigen Laserstrahl mittig zu treffen und dadurch sicherzustellen, dass der gesamte Strahlfächer bei allen drei Reflektionsflächen ohne Einbußen reflektiert wird, und kein seitliches Abschneiden eines Strahlfächers bei einer der Umlenkungen erfolgt.

Ferner wird die unerwünschte selbsttätige Verstellung durch Temperaturänderungen, Erschütterungen und ähnliche Umwelteinflüsse reduziert.

Um den Prismenkörper einfach zu haltern und zu justieren, ist er in einer Prismenfassung aufgenommen, die gegenüber dem Gehäuse einstellbar ist.

Hierzu wird der Prismenkörper um eine der beiden Richtungen, die seine Hauptebene aufspannen, insbesondere die X- und Y-Richtung, verschwenkt.

Als Hauptebene wird dabei die Ebene verstanden, die durch alle drei Reflektionsflächen des Prismenkörpers hindurchgeht.

Diese ist im Prinzip keine einzige Ebene, sondern eine begrenzte Menge von Ebenen, da jede der Reflektionsflächen eine begrenzte räumliche Ausdehnung besitzt. Jedoch ist es ausreichend, wenn für eine der Ebenen dieser begrenzten ebenen Menge diese Bedingung eingehalten wird.

Vorzugsweise wird die Prismenfassung und damit der Prismenkörper nur durch Verschwenken um die beiden sich kreuzenden Raumrichtungen eingestellt und sonst keine weitere Justierung vorgenommen.

Falls doch, ist dies ein Verdrehen um eine dritte, die beiden anderen Raumrichtungen kreuzende und insbesondere lotrecht auf diesen stehende, Raumachse, insbesondere die Z-Achse.

Konstruktiv möglichst einfach und dennoch zuverlässig und genau werden diese Justierbewegungen realisiert, indem das Schwenken z. B. mittels Schwenkschrauben dadurch erfolgt, dass die Prismenfassung aus zwei zueinander beweglichen Teilen besteht, nämlich dem Prismenteil, der den Prismenkörper aufnimmt und den Fixierteil, der fest am Gehäuse fixiert wird.

Die Schwenkelemente - wie etwa die Schwenkschrauben-werden zwischen den beiden Teilen angeordnet und verschwenken somit den Prismenteil gegenüber dem fest angeordneten Fixierteil.

Zusätzlich können dazwischen Federn angeordnet sein, die die beiden Teile immer unter der gewünschten Vorspannung zueinander halten, so dass mittels der Schrauben nur eine Kraft in eine Richtung, also entgegen der Federkraft, aufgebracht werden muss und die Rückkraft durch die Federkraft erfolgt.

Das Verdrehen wird dadurch ermöglicht, dass das Fixierteil eine Scheibe oder ein Ring mit einem runden Außenumfang ist, insbesondere mit einer umlaufenden Schulter, und am aufnehmenden Gehäuse mit seinem Außenumfang anliegt, und zwar wenigstens über einen Teil des Umfanges, also über Umfangssegmente.

Zwischen einem solchen runden Fixierteil und einem aufnehmenden Gehäuse, welches eine Drehung des runden Fixierteiles geometrisch zulässt, können dann Drehelemente wie etwa Drehschrauben angeordnet werden, durch deren Verdrehung das runde Fixierteil im aufnehmenden Gehäuse etwas gedreht werden kann. Beispielsweise können hierzu die Drehschrauben in der Ebene des Ringes oder der Scheibe des Fixierteiles liegen, sich am Gehäuse abstützen und tangential gegen einen vorstehenden Anschlag des Fixierteiles drücken und dadurch eine Drehung bewirken.

Bei den Stellelementen und Drehelementen ist dabei darauf zu achten, dass diese selbsthemmend ausgebildet sind, da hierdurch zusätzliche Klemmelemente eingespart werden können.

Für eine einfache Montage der Prismenfassung im umgebenden Gehäuse ist dieses Gehäuse vorzugsweise zweiteilig ausgebildet und greift bei einem runden Fixierteil mit jedem seiner Gehäuseteile über maximal 180° des Umfanges an.

Dadurch kann das runde Fixierteil in das eine Gehäuseteil in Richtung seiner Radialebene eingeschoben und anschließend das zweite Gehäuseteil gegenüber dem ersten Gehäuseteil verschraubt werden, wodurch die Prismenfassung fest im Gehäuse aufgenommen ist, da sich insbesondere der durch die Schulter bedingte Teil mit größerem Durchmesser der Prismenfassung dann auf der einen Seite und der von der Schulter abgewandte Prismenteil auf der anderen Seite der Ebene einer ringförmigen Aufnahme des Gehäuses befindet.

Aus diesem Grund wird das Fixierteil, insbesondere das runde Fixierteil, zur Hauptebene des Prismenkörpers versetzt und damit oberhalb oder unterhalb des Prismenkörpers angeordnet, und zwar mit möglichst geringem Abstand, wodurch sich optimal kleine Hebelarme zwischen dem Fixierteil und dem Prismenkörper ergeben, beispielsweise verglichen damit, wenn das Fixierteil in der Ebene des Prismenkörpers seitlich zu diesem versetzt angeordnet wäre, da der Prismenkörper in der Regel ein flacher Prismenkörper ist, dessen Ausdehnung in seiner Hauptebene deutlich größer ist als quer hierzu.

In einer bevorzugten Bauform sind die Ecken, die für die Strahlführung in der Regel nicht benutzt werden, jeweils abgeschnitten, so dass sich konkret ein 4-, 5- oder 6-Eck ergeben kann.

Der Prismenkörper ist in der Aufsicht auf diese Hauptebene betrachtet ein rechtwinkliges Dreieck, dessen Hypothenuse insbesondere unter einem Winkel von jeweils 45° zu seinen beiden Katheten liegt. Dennoch bildet er nicht unbedingt ein gleichseitiges Dreieck, da eine Ecke des Dreieckes, die von Hypothenuse und Kathete gebildet ist, abgeschnitten, so dass es sich um eine Form mit grober Dreiecksform, konkret jedoch um eine Vierecksform, insbesondere mit zwei zueinander parallelen Seiten, handelt.

Der Prismenkörper ist in der Prismenfassung so angeordnet, dass seine Hypothenuse unter dem runden Fixierteil hindurch verläuft und insbesondere genau unter deren Mittelpunkt.

Damit die Drehung des Fixierteiles mittels der Drehelemente auch bei bereits angebrachten, jedoch nicht festgezogenen, Verschraubungen des Fixierteiles am Gehäuse möglich ist, besitzen die Durchgangsöffnungen, durch welche sich die Fixierschrauben hindurcherstrecken, mit welchem das Fixierteil gegenüber dem Gehäuse verschraubt wird, einen deutlich größeren Durchmesser als der Durchmesser der Fixierschrauben beträgt.

Der Prismenkörper muss in der Prismenfassung möglichst spielfrei aufgenommen sein, damit die Einstellbewegungen der Prismenfassung unmittelbar und 1:1 auf den Prismenkörper übertragen werden.

Zu diesem Zweck ist der Prismenkörper entweder in der Prismenfassung verklebt oder vorzugsweise formschlüssig darin gehalten, insbesondere nur über Formschluss darin gehalten.

Dann wird jedoch der Prismenkörper in der Prismenfassung mindestens in der Richtung quer zur Hauptebene, vorzugsweise in allen drei Raumrichtungen, mittels Federkraft ständig gegen formschlüssige Anschläge der Prismenfassung gehalten, beispielsweise mittels elastischen Federzungen, die Bestandteil der Prismenfassung sind.

Dies ist beispielsweise dadurch möglich, dass die Prismenfassung aus Kunststoff besteht, was auch für das Gehäuse das bevorzugte Material ist.

Eine solche Prismenfassung kann den Prismenkörper im wesentlichen allseitig umschließen bis auf eine Einschuböffnung, durch die der Prismenkörper in die Prismenfassung eingesetzt werden kann, und bis auf Durchtrittsöffnungen für den Laserstrahl an den Stellen, an denen er in den Prismenkörper ein- und wieder austritt.

Da es sich bei dem Laserstrahl um einen innerhalb eines Fächerbereiches sich bewegenden Laserstrahl handelt, sind diese Durchtrittsöffnungen schlitzförmig bzw. weisen die Form von länglichen Rechtecken auf.

Der Rest des Prismenkörpers wird durch die Prismenfassung abgedeckt, was das unerwünschte ein- und austreten sowohl von Laserlicht als auch von Fremdlicht verhindert, weshalb die Prismenfassung aus undurchsichtigem Material und auf der den Prismenkörper zugewandten Seite insbesondere aus nicht reflektierendem Material besteht.

Eine solche Umlenkspiegeleinheit kann für alle Situationen eingesetzt werden, bei denen ein fächerförmig ausgelenkter Lichtstrahl wie etwa ein Laserstrahl relativ kurz hintereinander drei Strahlumlenkungen erfahren muss, deren Umlenkebenen in einem Winkel zueinander liegen und insbesondere die Austrittsrichtung parallel, jedoch in Gegenrichtung, zur Eintrittsrichtung ist und insbesondere die Umlenkebenen senkrecht zueinander stehen.

Letzteres wäre auch mit nur zwei Strahlumlenkungen möglich, jedoch mit einer geringeren Fehler-kompensierenden Wirkung.

Eine bevorzugte Anwendung dieser Umlenkspiegeleinheit ist der Einsatz in einer Laserbeschriftungsvorrichtung, vor allem wenn dabei die zu beschriftende Karte in ein und derselben Aufspannung in der Vorrichtung bzw. im Kartenschlitten der Vorrichtung nacheinander sowohl von oben als auch von unten, also auf beiden Seiten der Karte, mit dem Laser bearbeitet werden soll.

Das Gehäuse der Umlenkspiegeleinheit, welches deren Prismenfassung aufnimmt, kann dann ein Teil des Grundgestells der Laserbeschriftungsvorrichtung sein, in dem die drei still stehenden Umlenkspiegel durch die Umlenkspiegeleinheit, also insbesondere deren Prismenkörper, ersetzt sind.

Sofern das das Fixierteil umgebende Gehäuseteil zweiteilig ausgebildet ist, kann natürlich nur eines davon einstückiger Bestandteil des Grundgestells der Laserbeschriftungsvorrichtung sein.

Wenn in der Laserbeschriftungsvorrichtung die Karten in einer Aufspannung von oben als auch von unten gelasert werden, ist eine von zwei vorzugsweise spiegelsymmetrischen oder identischen Umlenkspiegeleinheiten auf beiden Seiten der Karten-Hauptmittelebene vorhanden und spiegelbildlich hierzu montiert.

Die Zusammenfassung der drei Strahlumlenkungen in einem Prismenkörper bewirkt auch, dass dadurch der Prismenkörper insgesamt von den Abmessungen sehr klein gehalten werden kann, was wiederum den Zweck fördert, die Laserbeschriftungsvorrichtung möglichst klein und kompakt auszubilden.

Ein sehr kompakter Aufbau entsteht auch dadurch, dass die Relativauslenkung des Laserstrahls zur Kartenoberfläche nur in der einen Richtung, beispielsweise der Y-Richtung, vom Laserstrahl mittels entsprechender Strahlführung, also insbesondere mittels Umlenkspiegeln z. B. eines Galvanometerspiegels oder eines sich drehenden Polygonspiegels und weiterer Umlenkspiegel, realisiert wird, während die Bewegung in der anderen Richtung, der X-Richtung, durch die Bewegung der Karte realisiert wird, indem sie sich in einem in dieser Richtung beweglichen Kartenschlitten fixiert befindet. Es kann statt der Bewegung des Substrates (Karte) auch eine Bewegung zumindest des letzten Ablenkspiegels entlang des Substrates als so genannter "Optikschlitten" erfolgen.

Dies liegt daran, dass durch die Auslenkung des Laserstrahls in nur einer Richtung der Laserstrahl statt zu einem dreidimensionalen Kegel lediglich zu einem zweidimensionalen Fächer aufgespreizt werden muss, mit der Folge, dass die entsprechenden Umlenkspiegel eine nennenswerte Ausdehnung nur in der einen Richtung, nämlich der Breite des Fächers, besitzen müssen und in der anderen Raumrichtung sehr schmal ausgebildet sein können.

Die Tatsache, dass der Kartenschlitten (optischer Schlitten im Falle der Bewegung des letzten Spiegels) aufgrund seiner sehr viel größeren Masse nicht so schnell beschleunigt und damit bewegt werden kann wie ein leichter Umlenkspiegel, führt nur dem ersten Anschein nach zu einem starken Erhöhen der Beschriftungszeit: Denn der Kartenschlitten (oder optische Schlitten) muss nicht für die Beschriftung jedes einzelnen Pixels bewegt werden, sondern in einer X-Position des Kartenschlittens oder optischen Schlittens werden mehrere, vorzugsweise alle, Y-Positionen beschriftet, sodass der Kartenschlitten nur entsprechend der Anzahl der X-Positionen, in der er bewegt wird, beschleunigt werden muss.

Da der bewegliche Galvanometerspiegel oder Polygonspiegel, im folgenden als Fächerspiegel bezeichnet, der den Laserstrahl fächerförmig ablenkt, sich stufenweise, entsprechend der Y-Positionen der gewünschten zu beschriftenden Pixel auf der Karte, bewegt, ist selbstverständlich eine Steuerung vonnöten, die in Abstimmung mit der Winkelstellung des Fächerspiegels und darüber hinaus auch mit der momentanen X-Position des Kartenschlittens oder optischen Schlittens den Laser ansteuert, also einen Laserschuss an der gewünschten X-Y-Position veranlasst, und auch die Leistung des Lasers dabei steuert.

Eine weitere Verringerung der Baugröße der Vorrichtung wird erfindungsgemäß dann erreicht, wenn die Karte auf beiden Seiten beschriftet werden soll.

In diesem Fall ist die Karte lediglich entlang der Ränder - die nicht beschriftet werden müssen - in der Aufnahme des Kartenschlittens fixiert, liegt jedoch mit ihrer Unterseite somit nicht vollflächig in dem Kartenschlitten auf oder ist an der Unterseite nicht von dem Kartenschlitten abgedeckt.

Dadurch können in einer Aufnahme im Kartenschlitten nacheinander sowohl von oben als auch von unten her die Beschriftungen der beiden Seiten der Karte vorgenommen werden.

Zu diesem Zweck ist ein insbesondere zwischen zwei Positionen hin und her schwenkbarer Auswahlspiegel für den Laserstrahl vorhanden, der den Strahl wahlweise zur Oberseite oder zur Unterseite der im Kartenhalter aufgenommenen Karte leitet.

Der Auswahlspiegel ist vorzugsweise seitlich neben dem Kartenschlitten oder optischen Schlittens und dessen Bewegungsbahn angeordnet und im Strahlengang noch vor dem wenigstens einen stillstehenden Umlenkspiegel, jedoch hinter dem Fächerspiegel, angeordnet, wobei hierfür selbstverständlich der mindestens eine Umlenkspiegel auf jeder der beiden Seiten der Hauptebene der Karte analog vorhanden sein muss.

Bevorzugt wird der Auswahlspiegel zwischen den zwei Positionen um genau 90° verschwenkt und die optische Achse der Laserstrahlapertur verläuft parallel zur Mittel-Hauptebene des Kartenschlittens, insbesondere auf dieser Mittel-Hauptebene, und zwar neben der Bewegungsbahn des Kartenschlittens, so dass der Auswahlspiegel sich um eine in Y-Richtung verlaufende Schwenkachse neben dem Kartenschlitten dreht.

Dadurch, dass ein Teil des Strahlverlaufes sich neben der Bewegungsbahn des Kartenschlittens oder optischen Schlittens befindet, wird hierfür bereits keine Bauhöhe senkrecht zur Kartenebene bzw. zur Ebene des Kartenschlittens benötigt.

Die Vorrichtung wird ferner dadurch besonders einfach in ihrem Aufbau, dass hinter dem Auswahlspiegel mittels der fest montierten Reflektionsflächen auf jeder Seite der Hauptebene der Laserstrahl nicht mittels der theoretisch möglichen, nur zwei, Strahlumlenkungen umgelenkt wird, sondern mit Hilfe von drei Umlenkungen, von denen jede eine Umlenkung um 90° ist.

Zum einen bewirkt dies, dass alle drei Umlenkungen auf jeder der Seiten, bei doppelseitiger Beschriftung alle sechs Umlenkungen, den gleichen Ein-und Austrittswinkel an der jeweiligen Reflektionsfläche besitzen, also wegen gleicher Reflexionsbedingungen z. B. im Falle der Verwendung von Spiegeln an Stelle eines Prismenkörpers die gleiche dielektrische Beschichtung besitzen können, was bei Einsatz von nur zwei Umlenkungen auf jeder Seite nicht der Fall wäre.

Die Reflektionsflächen der Umlenkungen sind dabei so montiert und justiert, dass der Brennpunkt des Laserstrahls immer auf der Oberfläche der im Kartenschlitten befindlichen Karte liegt, unabhängig von der Position der beweglichen Spiegel, also Auswahlspiegel und Fächerspiegel, die die einzigen während des Beschriftungsprozess bewegten Spiegel in der Vorrichtung sind.

Falls ein Brennpunkt unterhalb der Oberfläche der Karte, also in einer tieferen Schicht der Karte, benötigt wird, können hierfür die drei während des Beschriftungsprozess nicht bewegten Reflektionsflächen bezüglich ihres Abstandes zur Karte nachjustiert werden. Eine Justierung entweder der Führungen für den Kartenschlitten in ihrer Höhenlage, also quer zur X-Y-Richtung, oder eine austauschbare Aufnahme im Kartenschlitten, so dass unterschiedliche Aufnahmen mit unterschiedlichen Höhenlagen der Karte im Kartenschlitten möglich sind, kann dann durchgeführt werden, wenn nur eine einseitige Beschriftung der Karte vorgesehen ist.

Ferner kann die Vorrichtung so weitergebildet werden, dass eine Oberfläche mit einer optischen Linsenstruktur nach dem CLI- bzw. MLI-Verfahren mit dem Laser beschriftet wird.

Da zu diesem Zweck der Laserstrahl nicht lotrecht auf der Oberfläche der Karte auftreffen darf, wie es bei der Grundversion der erfindungsgemäßen Vorrichtung vorgesehen ist, kann in den Strahlengang des Lasers zwischen dem letzten Umlenkspiegel und der Kartenoberfläche ein Schrägprisma zum Ablenken und damit schrägen Auftreffen des Laserstrahls auf der Kartenoberfläche automatisch eingefahren werden. Die durch die Strahlablenkung bedingte Verschiebung des Auftreffpunktes des Laserstrahls auf der Kartenoberfläche wird im eingefahrenen Zustand des Prismas von der Steuerung rechnerisch berücksichtigt.

Sofern das Schrägprisma - je nach Richtung seiner Wirksamkeit - eine Auslenkung in X-Richtung bewirkt, kann dies durch entsprechendes Anfahren einer anderen Position mittels des Kartenschlittens erreicht werden.

Sofern dies eine Auslenkung in Y-Richtung bewirkt, muss hierfür über die Ansteuerung des Fächerspiegels die durch das Schrägprisma bewirkte Verschiebung des Auftreffpunktes kompensiert werden.

### c) Ausführungsbeispiele

Ausführungsformen gemäß der Erfindung sind im Folgenden beispielhaft näher beschrieben. Es zeigen:
- Fig. 1:: den Prismenkörper,
- Fig. 2:: die Primenfassung,
- Fig. 3:: Prinzipdarstellungen des Strahlenganges,
- Fig. 4:: die Laserbeschriftungsvorrichtung in verschiedenen Ansichten und Teilschnitten, und
- Fig. 5:: die Umlenkspiegeleinheit in der Einbausituation im Grundgestell der Laserbeschriftungsvorrichtung.

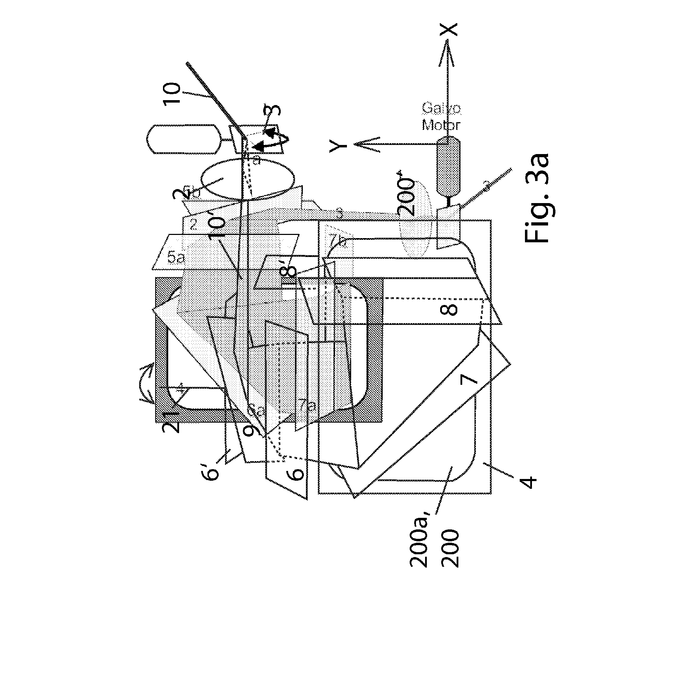

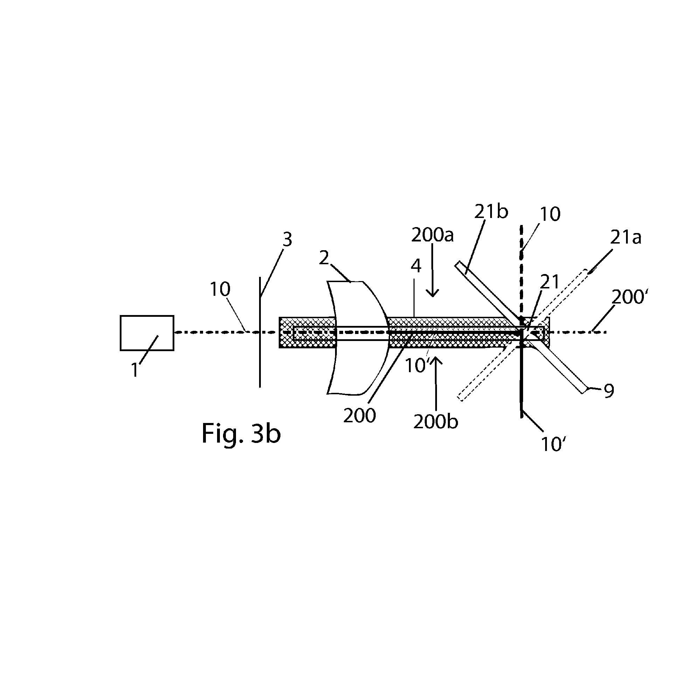

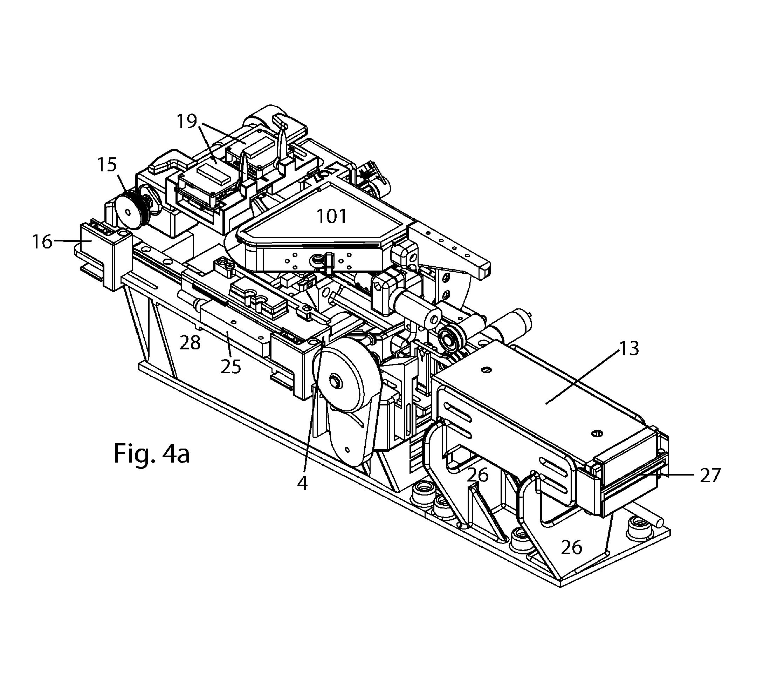

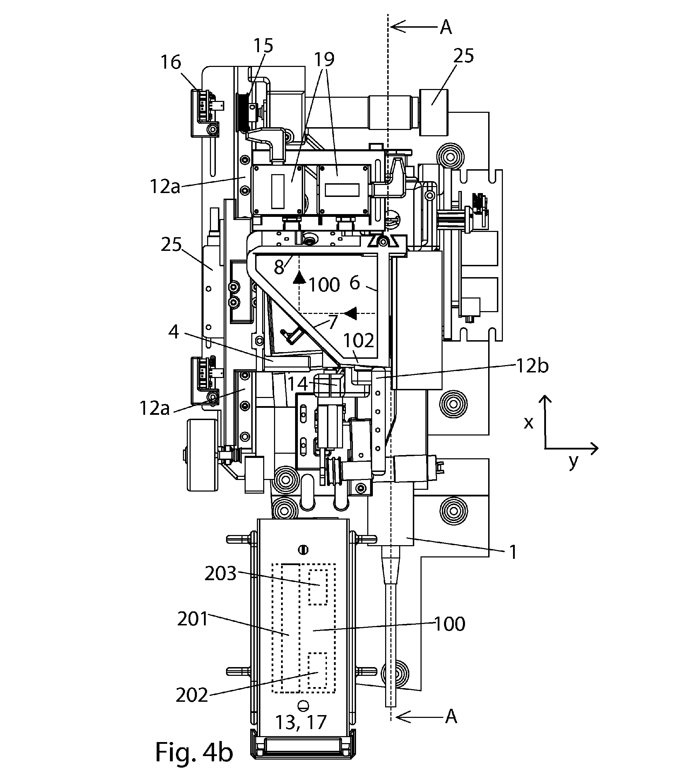

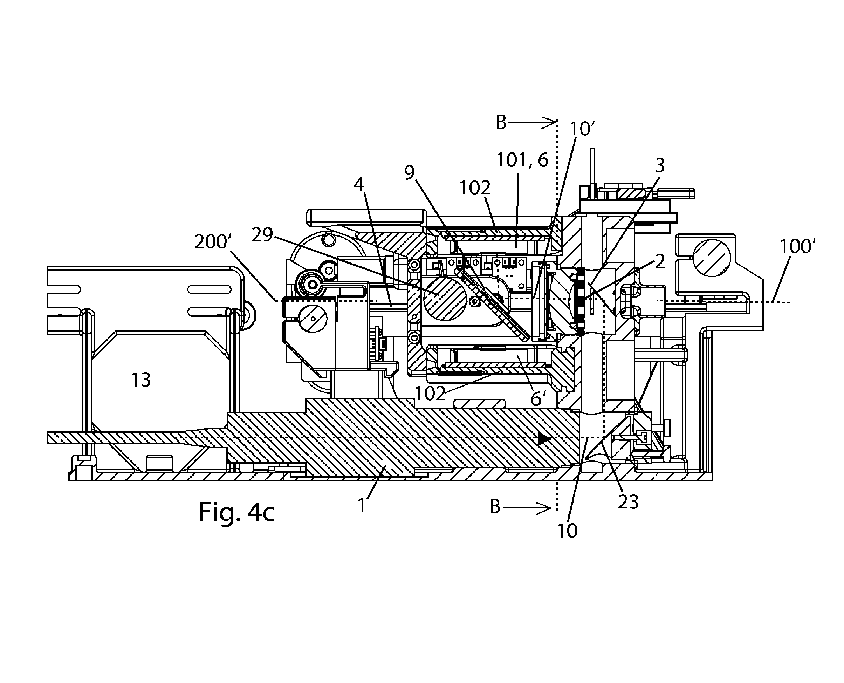

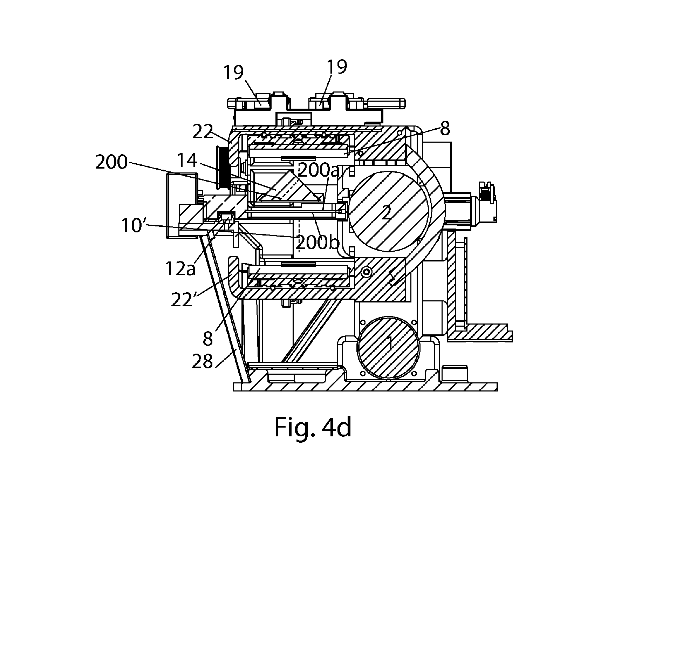

Zunächst wird in den Figuren 3 die Grundsituation dargestellt, die vorliegt, wenn mit der Laserbeschriftungsvorrichtung gemäß Fig. 4 eine Karte 200 in der Laserbeschriftungsvorrichtung liegend sowohl von oben als auch von unten mittels Laser beschriftet werden soll.

Figur 3a zeigt die zu beschriftende rechteckige Karte 200, die wie üblich abgerundete Ecken besitzt, und formschlüssig aufgenommen ist in einem Kartenschlitten 4, welcher in X-Richtung, in diesem Fall die größere Erstreckungsrichtung der Hauptebene 200' der Karte 200 und damit des Kartenschlittens 4, gesteuert bewegbar ist.

Ein Laserstrahl 10 wird neben dem Kartenschlitten 4 zunächst mittels eines oszillierend um einen definierten Winkelbetrag hin- und herschwenkenden Fächerspiegels 3, der im Bereich dazwischen stufenweise in definierten Winkelstellungen jeweils angehalten wird entsprechend den verschiedenen zu erreichenden Y-Positionen auf der Karte 200, an irgendeiner Stelle im Strahlengang zu einem Strahlfächer 10' aufgefächert, der auf der Oberseite 200a der Karte 200 eine in Y-Richtung verlaufende Lichtlinie bzw. einzelne in Y-Richtung aneinander gereihte Lichtpunkte ergibt, falls zu jeder Y-Position der Laser aktiv ist.

Da jedoch keine durchgehende Linie auf der Karte erzeugt werden soll, sondern nur einzelne Pixel in Abhängigkeit von den zu erzeugenden z. B. Schriftbild eingebrannt werden sollen, steuert eine Steuerung 5 die Laserquelle 1 so, dass nur bei der gewünschten Winkelstellung des Fächerspiegels 3, also der gewünschten Y-Position und natürlich mit dem Kartenschlitten 4 in der dafür vorgesehen X-Position ein Pixel auf der Oberseite 200a der Karte 200 durch Auslösen eines Laserschusses eingebrannt wird.

Der Strahlfächer 10' wird zunächst durch eine Optik 2 geführt, die bewirkt, dass der Brennpunkt des jeweiligen Laserstrahls immer auf der Oberfläche 200 der Karte 200 im Kartenschlitten 4 liegt, also weder zu hoch noch zu tief, unabhängig von der Stellung der im Strahlengang angeordneten, beweglichen Spiegel.

Der vom Fächerspiegel 3 und nach der Optik 2 noch parallel zur Bewegungsrichtung des Kartenschlittens 4 neben diesem verlaufende Strahlfächer 10', dessen Ebene dabei lotrecht zur Hauptebene 200' der im Kartenschlitten 4 aufgenommenen Karte 200 steht, wird in dem Beispiel der Figur 3a in der Folge durch vier hintereinander angeordnete, fest montierte Reflektionsflächen 9, 6, 7, 8 jeweils um 90° umgelenkt, so dass die letzte Umlenkung eine quer zur Bewegungsrichtung, der X-Richtung, des Kartenschlittens 4 über die gesamte Breite der Karte 10 verlaufende Lichtlinie als Abbild des Strahlfächers 10' auf der Kartenoberseite 200a ergibt.

Die Reflektionsflächen 9, 6, 7, 8 lenken dabei den Strahlfächer 10' jeweils um 90° um und besitzen in dieser Hinsicht gleiche Reflexionsbedingungen und sind damit gleich hergestellt, insbesondere mit der gleichen dielektrischen Beschichtung ausgestattet und daher auch besonders günstig in der Anschaffung. Die Umlenkspiegel 6, 7, 8 sind in Form eines einzigen Prismenkörpers realisiert, der später beschrieben wird.

Da diese Umlenkspiegel 9, 6,7,8 jeweils einen Strahlfächer 10' umleiten müssen, besitzen sie eine längliche schmale Abmessung mit einer Länge entsprechend der Breite des Strahlfächers 10' an dieser Stelle bzw. etwas größer, jedoch einer wesentlich geringeren Breite.

Auf diese Art und Weise lässt sich durch schrittweise Bewegung des Kartenschlittens 4 in X-Richtung um jeweils z. B. den Abstand eines Pixels die gesamte Oberfläche der Karte bis auf die Randbereiche, in denen die Karte 200 im Kartenschlitten 4 gehalten ist und die ohnehin nicht beschriftet werden sollen, nach Belieben mit Zahlen, Buchstaben, Logos, einem Bild des Karteninhabers, Symbolen des Kartenherausgebers etc. beschriften.

Der Auswahlspiegel 9 ist ein insbesondere um 90° verschwenkbarer Spiegel, der sich um eine Schwenkachse 21 drehen lässt, die parallel, insbesondere in der Hauptebene 200' der im Kartenschlitten 4 befindlichen Karte 200, in diesem Fall die Zeichenebene, angeordnet ist.

Wie Fig. 3b zeigt, ist der Auswahlspiegel 9 dabei zwischen zwei Endstellungen 21 a, 21 b verschwenkbar, die den Strahlfächer 10' wahlweise in den Bereich oberhalb der Hauptebene 200' der Karte 200 im Kartenschlitten 4 und damit zu den Umlenkspiegeln 6, 7, 8 gemäß Figur 3a und von dort auf die Oberseite 200a der Karte 200 leiten oder - in der anderen Endstellung des Auswahlspiegels 9 - in den Bereich unterhalb der Hauptebene 200' und über dort analog vorhandene fest montierte Umlenkspiegel 6', 7', 8' auf die Unterseite 200b der Karte 200.

In Figur 4c ist unter anderem der Elektrodrehmagnet 29 dargestellt, der je nach Beaufschlagung mit Strom den Auswahlspiegel 9 in die eine oder andere Endlage zieht.

Dabei schwenkt der Auswahlspiegel 9 nicht ständig hin und her, sondern bleibt in einer seiner Endstellungen, bis die Beschriftung der Oberseite 200a oder Unterseite 200b der Karte 200 abgeschlossen ist.

Figur 3b zeigt in einer Seitenansicht auf die Anordnung der Figur 3a, dass der Laserstrahl 10' von der Laserquelle 1 bis zum Auswahlspiegel 9 in einer Richtung verläuft, die nicht nur parallel, sondern in der Mittel-Hauptebene 200' der im Kartenschlitten 4 eingelegten Karte 200 verläuft, die durch die X-und Y-Richtung definiert ist, also die Haupterstreckungsrichtungen der Karte 200, und sich in der Mitte der Dicke des Kartenkörpers 200 befindet.

Dies hat den Vorteil, dass der Auswahlspiegel 9 in seinen Endstellungen um +/- 45° schräg zur Richtung des Laserstrahls 1 stehen muss und somit einen definierten Schwenkwinkel von 90° mit definierten Endstellungen vollziehen muss, was mittels eines entsprechend z. B. eines angesteuerten Motors, Elektrodrehmagneten relativ leicht zu bewerkstelligen ist.

Der Strahlfächer 10' wird durch die vorletzte Reflektionsfläche 7 in eine Richtung entgegen der ursprünglichen Strahlrichtung zum nachfolgenden nächsten Spiegel geführt, wodurch sich eine besonders kompakte Bauform der Vorrichtung ergibt.

Die Figuren 4 zeigen eine konkrete erfindungsgemäße Vorrichtung, bei der in unwesentlichen Details - wie nachfolgend näher erläutert - die Strahlführung etwas von denen der Prinzipdarstellungen in Fig. 3 abweicht.

Dabei ist Figur 4a eine perspektivische Ansicht von links oben auf die Vorrichtung, während Figur 4b eine exakte Aufsicht und Figur 4c eine exakte Seitenansicht von rechts zeigt.

Wie am besten die Figuren 4b und 3a erkennen lassen, liegt die längliche, tubusförmige Laserquelle 1 in der Aufsicht betrachtet im rechten, unteren Bereich der Vorrichtung, und erstreckt sich über mehr als 2/3 deren Länge.

Um die Baulänge der Vorrichtung kurz zu halten, ist deshalb die Laserquelle 1 unterhalb der Mittel-Hauptebene 200' angeordnet und wird - wie in Figur 4c zu erkennen - durch zwei Umlenkungen um jeweils 90° in eine Strahlrichtung entlang der Mittel-Hauptebene 200' umgelenkt, allerdings immer noch neben dem Kartenschlitten 4 und hinter dem zweiten dieser beiden Umlenkspiegel 23, 3 in entgegengesetzte Richtung zur ursprünglichen Strahlrichtung unmittelbar hinter der Laserquelle 1 verlaufend.

Dabei kann einer der beiden Umlenkspiegel, in diesem Fall der zweite der beiden Umlenkspiegel, als Fächerspiegel 3 beweglich angeordnet sein, um den Laserstrahl 10 in den gewünschten Strahlfächer 10' aufzuspalten.

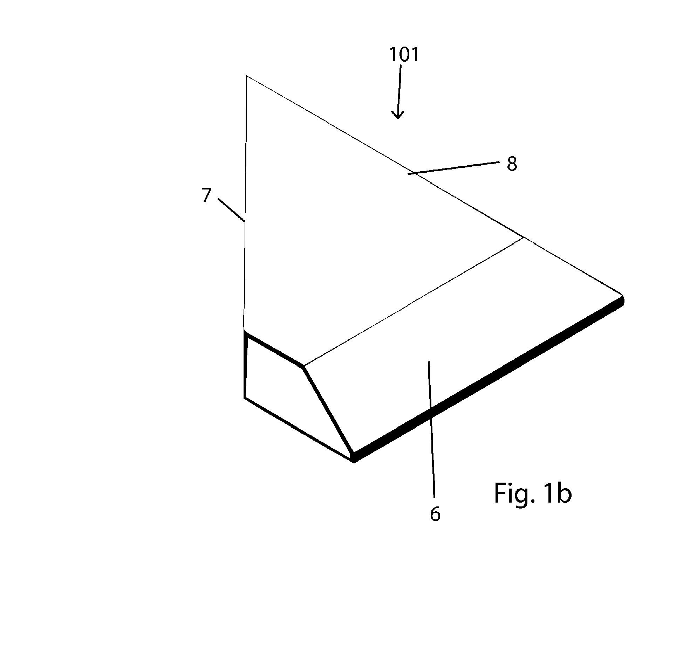

Dieser Strahlfächer 10' wird zunächst durch die fokussierende Optik 2 geleitet und anschließend auf den gemäß Figur 1b schwenkbar angeordneten Auswahlspiegel 9, der in Figur 4c in einer solchen Endstellung steht, dass der Strahlfächer 10' nach oben, also in Richtung Oberseite 200a des Kartenschlittens 4, umgeleitet wird und dort auf den in Figur 4c sichtbaren ersten Umlenkspiegel 6 der drei Reflektionsflächen 6, 7 und 8 trifft, die an dem Prismenkörper 101 ausgebildet sind, der sich in spiegelbildlicher Anordnung, also mit analogen Reflektionsflächen 6', 7', 8' auch unterhalb der Haupt-Mittelebene 200' nochmals befindet, wie beispielsweise in Figur 4c gut zu erkennen.

Im Unterschied zur Prinzipdarstellung der Figuren 3a und 3b wird dabei der Strahlfächer 10' durch den vorletzten Umlenkspiegel 7 bzw. 7' nicht entgegen der ursprünglichen Abstrahlrichtung der Laserquelle 1 geleitet, sondern parallel zu dessen Abstrahlrichtung, was daher rührt, dass bei der konkreten Vorrichtung die Strecke der zur ursprünglichen Strahlrichtung entgegengesetzten Führung des Laserfächers 10' zwecks Verkürzung der Baulänge bereits im Bereich zwischen dem Fächerspiegel 3 und dem Auswahlspiegel 9 stattgefunden hat.

Von der letzten Reflektionsfläche 8 bzw. 8' des Prismenkörpers 101 aus wird der Strahlfächer 10' lotrecht auf die Kartenoberfläche 200a, b, aufgestrahlt.

Dabei ist oberhalb der Karte 200 in Figur 4d zusätzlich ein Schrägprisma 14 in den Strahlengang zwischen dem letzten Umlenkspiegel 8 und der Oberseite 200a der Karte 200 eingefahren, welches den Strahlfächer 200' - betrachtet in Längsrichtung der Vorrichtung und damit in Bewegungsrichtung des Kartenschlittens 4 - zur Seite hin ablenkt, so dass er nicht mehr rechtwinklig, sondern schräg auf der Oberseite 200a der Karte 200 auftrifft. Ein analoges Schrägprisma 14 kann auch auf der Unterseite vorhanden sein.

Dadurch wird auf einer Kartenoberfläche, die eine für ein CLI oder MLI geeignete optische Struktur beinhaltet, eine Laserbeschriftung auf der Karte 200 derart realisiert, dass je nach Betrachtungswinkel der Oberfläche der Karte 200 vom Betrachter unterschiedliche Bilder gesehen werden bzw. ein mittel Laser 1 eingebranntes Bild nur aus einer bestimmten Blickrichtung erkennbar ist und aus den anderen Blickwinkeln nicht erkennbar ist.

In Figur 4b befindet sich das Prisma 14 dagegen in der deaktivierten, zurückgezogenen Position, von der aus es gemäß Figur 4b nach vorne, unter die letzte Reflektionsfläche 8 automatisch vorwärtsgefahren werden kann.

In Figur 4b sind ferner oberhalb der Haupt-Mittelebene 200' und hinter dem Spiegelhalter 22 zwei CCD-Chips 19 mit Blickrichtung nach unten auf die Haupt-Mittelebene 200' angeordnet, um nach dem Einlegen der Karte 200 im Kartenschlitten 4 zunächst zu messen, wo sich die auf der Karte 200 bereits vorhandenen Vorbedruckungen 202 befindet, insbesondere hinsichtlich ihrer Anordnung zur Vorrichtung.

Zu diesem Zweck ist der Bewegungsweg des Kartenschlittens 4 ausreichend lang ausgebildet, um den Kartenschlitten 4 vor Beginn der Beschriftung mittels Laser zunächst bis unter diese CCD-Chips 19 fahren zu lassen, die zunächst die Platzierung der Vorbedruckung 202 auf der Karte 200 detektieren und bei zu starker Abweichung deren Ist-Position von der Soll-Position gegebenenfalls die Positionierung der Laserbeschriftung auf der Karte 200 verändern oder auch den Kartenrohling als Ausschuss anzeigen und nicht beschriften.

Zu diesem Zweck sind die beiden CCD-Chips 19 jeweils streifenförmig in X-und Y-Richtung verlaufend angeordnet, um die in diesen Richtungen verlaufenden Seitenkanten einer Vorbedruckung erfassen zu können.

Wie die Figuren ferner zeigen, ist der eigentlichen Laserbeschriftungseinheit eine Einheit zur elektronischen Beschriftung 13 vorgelagert, die meist als Zukaufeinheit vor der eigentlichen Laserbeschriftungseinheit in einer solchen Position, in diesem Fall auf quer stehenden Tragblechen 26, montiert ist, dass die in den Einführschlitz 27 am vorderen Ende dieser Einheit 13 eingesteckte Karte 200, die durch eigenständige Transportvorrichtungen im Inneren dieser Einheit weiter transportiert wird und am hinteren Ende durch einen analogen Auslass ausgeschoben wird, mit dem dahinter sich anschließenden Bewegungsweg des Kartenschlittens 4 fluchtet und ebenso wie dieser horizontal verläuft.

Auch die Übergabe der Karte 200 von dieser Einheit 13 in den Kartenschlitten 4 - und auch zurück - erfolgt automatisch, indem sich bei der Übergabe der Kartenschlitten 4 in seiner Startposition unmittelbar hinter der Beschriftungseinheit 13 befindet und eine von dieser Einheit ausgeschobene Karte unmittelbar in den rahmenförmigen Kartenschlitten 4 durch eine elektrisch angetriebene Rolle eingezogen wird, wobei die Karte auf diesem mit ihren Rändern außen umlaufend in einem schmalen Bereich aufliegt. Sobald sich der Kartenschlitten aus seiner Startposition bewegt, wird die Karte von oben mittels eines Federarmes des Kartenschlittens 4 gehalten, der sich an dem von der Beschriftungseinheit 13 gegenüberliegenden Ende des Kartenschlitten 4 befindet und unter den die Karte 200 von der Einheit 13 automatisch geschoben wird.

Die mittels Laser beschriftete Karte 200 wird nach Fertigstellen der Beschriftung auf dem gleichen Weg zurücktransportiert, also indem der Kartenschlitten 4 bis zu der Startposition zurückverfährt und dort automatisch die Karte 200 aus dem Kartenschlitten 4 herausgehoben und in den Auslassschlitz der Einheit zur elektronischen Beschriftung 13 eingeschoben wird.

Dort wird die Karte 200 erfasst, rückwärts hindurchtransportiert und aus dem Einführschlitz 27 am vorderen Ende dieser Einheit 13 als fertig beschriftete Karte 200 ausgeworfen.

Das Beschreiben des Magnetstreifens 201 und/oder des elektronischen Chips 103 der Karte kann dabei wahlweise auf dem Hinweg oder Rückweg der Karte 200 durch diese elektronischer Beschriftungseinheit 13 erfolgen. Im hinteren Endbereich ist ferner die Absaugvorrichtung 15 zu erkennen, die die Luft von der Beschriftungsstelle absaugt und über einen Aktiv-Kohle- Filter 16 aus dem Gehäuse der Vorrichtung, welches die Figuren nicht zeigen, herausleitet.

Die in den Figuren 4d sichtbare Seitenwand 28 ist Teil des Grundgestells 17, an dem alle Komponenten des Geräts befestigt sind. Dieses dient primär der Stabilität des inneren Aufbaus und der Luftführung beim Absaugen von der Beschriftungsstelle.

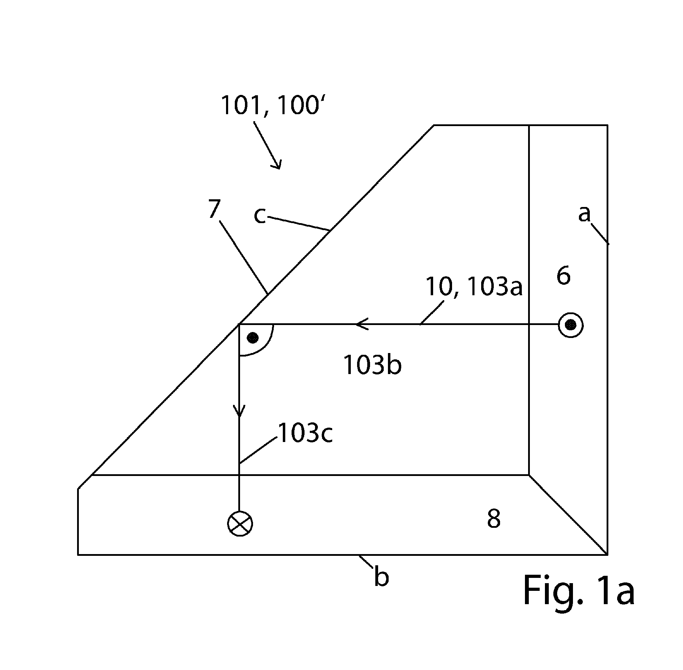

Die Figuren 1 zeigen den erfindungswesentlichen Prismenkörper 101 an dem die drei Reflektionsflächen 6, 7, 8 ausgebildet sind in der Aufsicht von oben und in perspektivischer Ansicht, und an denen der Laserstrahl 10 jeweils vollständig reflektiert wird:
In der Aufsicht der Fig. 1a betrachtet ist der plattenförmige Prismenkörper 101 ein rechtwinkliges Dreieck, bei dem beide Ecken zwischen der Hypotenuse c und den Katheten a, b abgeschnitten sind, aber unterschiedlich stark, so dass es sich konkret um eine Fünfecksform in der Aufsicht handelt.

Entlang der Katheten a, b ist die Schmalseite des plattenförmigen Ausgangskörpers des Prismenkörpers 101 abgeschrägt und bildet dadurch jeweils die Reflektionsflächen 6, 8, während die dazwischen liegende weitere Reflektionsfläche 7 durch die nicht abgeschrägte Schmalseite der Hypotenuse c gebildet wird.

Die Reflektionsflächen 6, 7, 8 besitzen jeweils die gleichen Reflektionsbedingungen und an jeder erfolgt insbesondere eine Strahlumlenkung um 90°:
Gemäß Fig. 1a trifft der Strahl lotrecht von unten in die Zeichenebene kommend auf und wird um 90° in die Zeichenebene umgelenkt. Dadurch wird eine erste Umlenkebene 103a definiert:
An der Reflektionsfläche 7 wird der Strahl innerhalb der Zeichenebene um 90° umgelenkt, wodurch durch ein- und austretenden Strahl an dieser Reflektionsfläche 7 eine zweite Umlenkebene 103b, nämlich parallel zur Hauptebene 100' des Prismenkörpers 101, definiert wird.

An der Reflektionsfläche 8 wird der Strahl aus der Hauptebene heraus nach unten lotrecht zur Zeichenebene abgelenkt, wodurch eine dritte Umlenkebene 103c durch ein- und austretenden Strahl an dieser Reflektionsfläche 8 definiert wird.

Daraus zeigt sich ferner, dass diese drei Umlenkebenen 103a, b ,c senkrecht aufeinander stehen und der Klappwinkel dazwischen jeweils 90° beträgt und die Klapprichtung eine fortlaufende Klapprichtung ist.

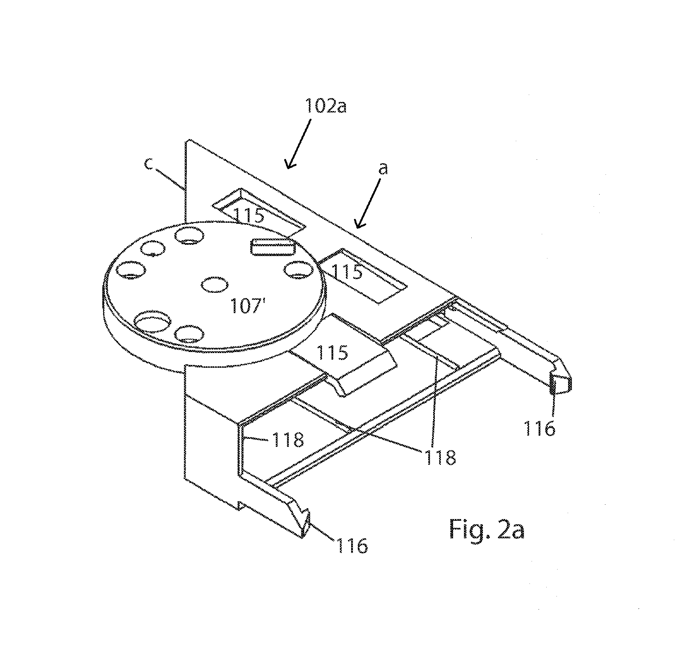

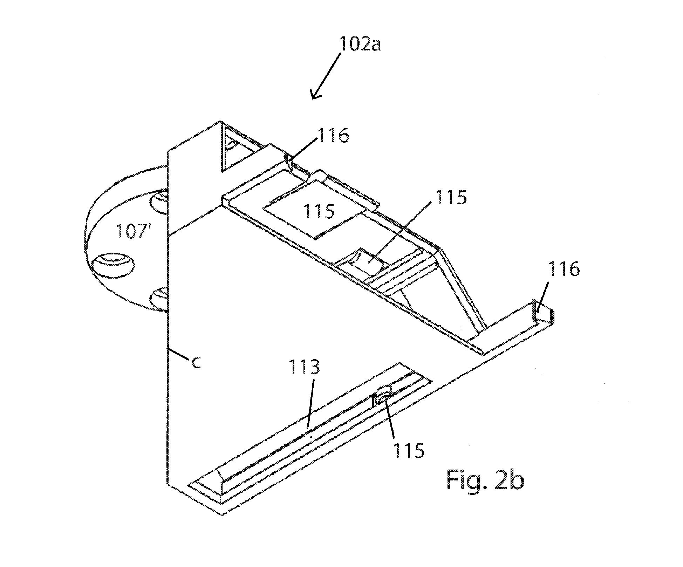

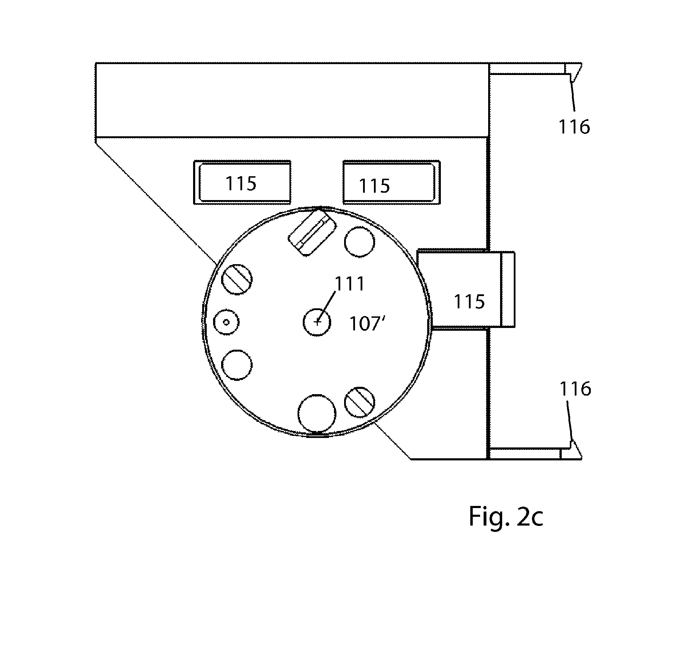

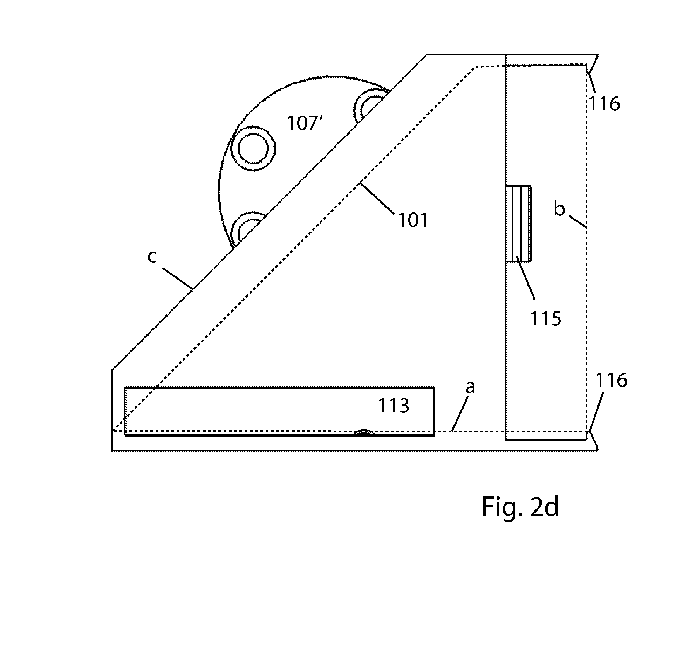

Um den Prismenkörper 101 besser handhaben zu können und vor allem die notwendige Justierung des Prismenkörpers 101 in der Laserbeschriftungsvorrichtung, also insbesondere gegenüber deren Grundgestell 17, vornehmen zu können, wird der Prismenkörper 101 in das Prismenteil 102a einer Prismenfassung 102 fixiert, die in den Figuren 2 dargestellt ist, und danach nur noch diese Prismenfassung 102 gehandhabt und justiert:

Bei dem Basisteil 102a der Prismenfassung 102 handelt es sich um ein Kunststoffteil, welches in den Figuren 2a und 2b perspektivisch von oben und von unten dargestellt ist, und in den Figuren 2c und 2d in der exakten Aufsicht von oben und unten.

Dabei ist an dem Prismenteil 102a in den Aufsichten die grundsätzliche Dreiecksform zu erkennen entsprechend dem Prismenkörper 101. Das Prismenteil 102a besteht aus einer Oberplatte und einer Unterplatte, die entlang einer Kathete a der Dreiecksform sowie im Bereich der abgeschnittenen Ecke aus Querwänden besteht, so dass ein umlaufender Rahmen entsteht, indem der Prismenkörper 101 so liegt, wie lediglich in Fig. 2d angedeutet:

Dabei steht der Prismenkörper 101 mit seiner anderen Kathete b aus dem umlaufenden Rahmen vor bis zu der Haltenase 118, die dort von den verlängerten Seitenwänden nach innen ragen.

Eingeschoben wird der Prismenkörper 101 von der offenen Kathete b her, wobei die Haltenasen 116 zunächst aus einander gebogen werde und dann hinter dem Prismenkörper einrasten, der an der geschlossenen Seite c des Prismenteils 102a anliegt.

Ferner sind in der Oberseite des Prismenteils 102a mehrere Federzungen 115 ausgebildet, die nach unten auf den eingesteckten Prismenkörper 101 drücken und diesen in spielfreie Anlage den Anschlägen 118 an der Unterseite sowie Querwand des Prismenteils 102a halten.

Entlang der Kathete a ist ferner in der Unterseite des Prismenteiles 102a eine Durchtrittsöffnung 113 für den Strahleintritt in den Prismenkörper 101 dargestellt. Für den Austritt wird keine separate Durchtrittsöffnung benötigt, da es sich dabei um den frei vorstehenden, bis zu den Haltenasen 116 reichenden Bereich des Prismenkörpers 101 handelt.

Auch in der Seitenwand der Kathete a ist eine Federzunge 115 ausgebildet, die den Prismenkörper 101 gegen die gegenüberliegende Seitenwand drückt.

Mit der Oberplatte der Prismenfassung 102 zusammen ist einstückig eine runde Scheibe 107' ausgebildet, die sowohl in der Höhe über die Oberseite des Prismenteils 102a vorsteht als auch mit etwa der Hälfte ihres Durchmessers auch über die schräg stehende rückwärtige Kante, also die Hypotenuse c, des Prismenteiles 102a vorsteht.

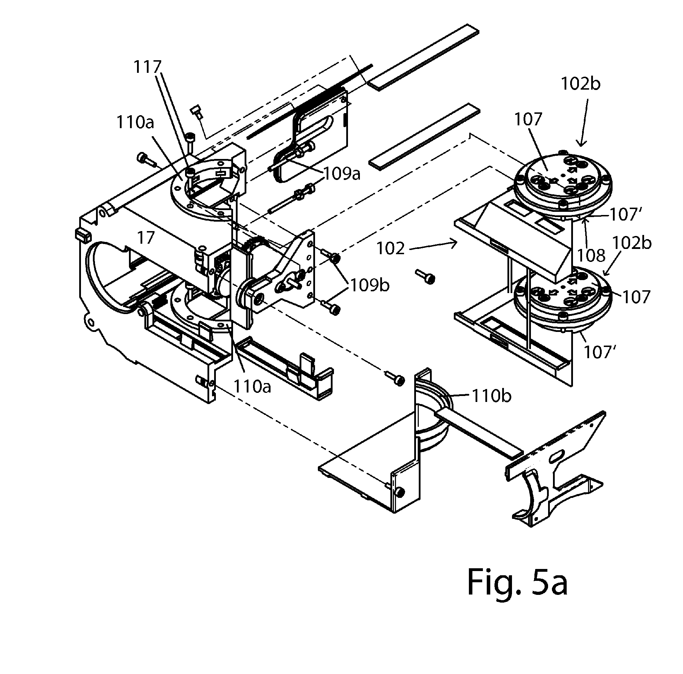

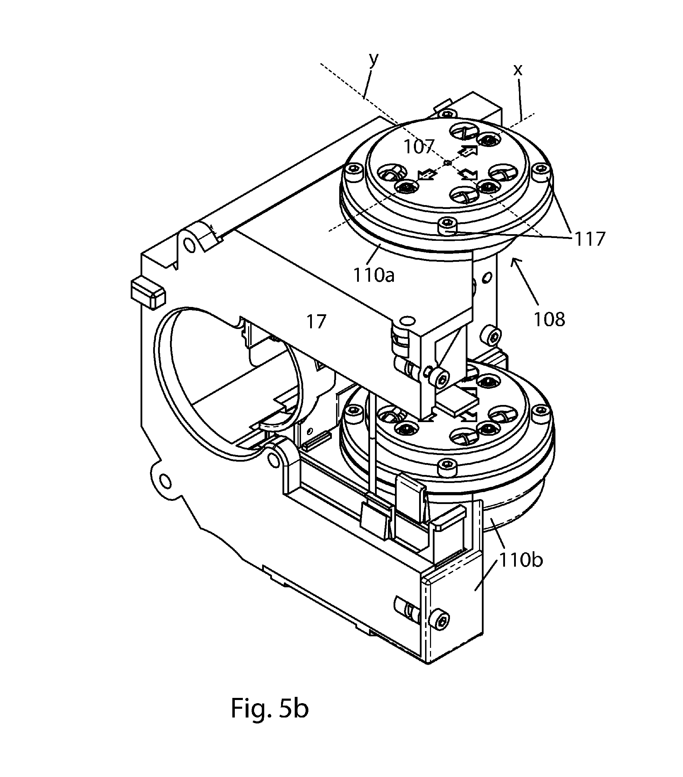

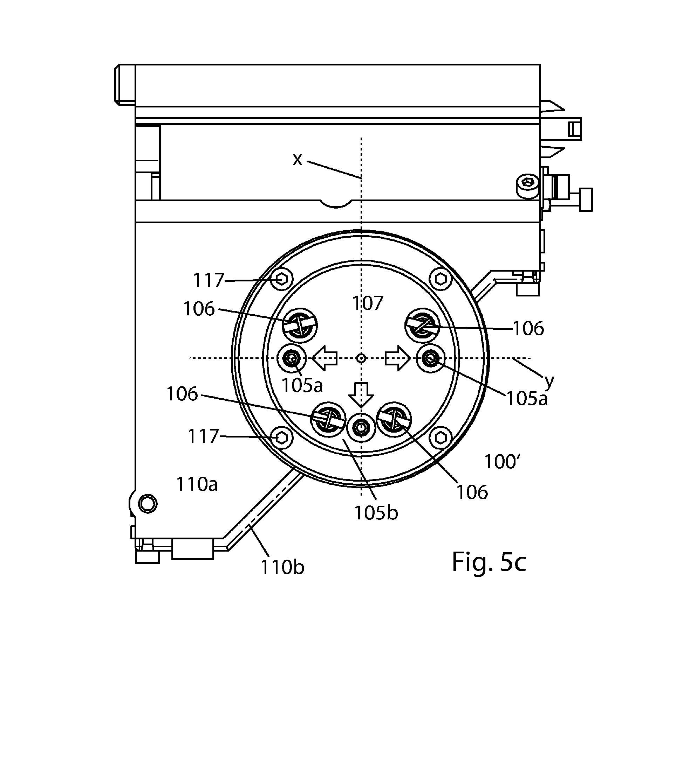

Das Prismenteil 102a mit darin spielfrei eingesetztem, z. B. formschlüssig gehaltenen, Prismenkörper 101 wird dann zu einer Umlenkspiegeleinheit 100 komplettiert und ggf. im Grundgestell 17 der Laserbeschriftungsvorrichtung eingebaut, wie in den Figuren 5 dargestellt.

Zunächst wird hierfür das in Fig. 2 beschriebene einstückige Prismenteil 102a zur Prismenfassung 102 komplettiert, indem über die dortige Scheibe 107' eine zweite Scheibe 107 montiert wird, welche über Schwenkschrauben 105a,b relativ zur darunter liegenden Scheibe 107' verschwenkbar ist um eine der beiden Richtungen, also z..B. X- oder Y-Richtung, die die Hauptebene 100' der Umlenkspiegeleinheit und damit auch der Scheibe 107 aufspannen.

Die Schwenkschrauben 105a, b verlaufen dabei lotrecht zur Hauptebene 100'. Zwischen den Scheiben 107, 107' sind Zugfedern 106 angeordnet, und zwar jeweils außermittig, die die Scheiben gegeneinander ziehen.

Wie weit sie die Scheiben 107, 107' gegeneinander ziehen, hängt davon ab, wie weit die Schwenkschrauben 105a, b gegenüber der oberen Scheibe 107 verschraubt werden und damit wie weit sie aus der oberen Scheibe 107 nach unten gegen die untere Scheibe 107' vorstehen, gegenüber der sie sich mit ihrer vorderen Stirnfläche abstützen.

Wie vor allem Figur 5c zeigt, sind bezüglich der X-Achse auf zwei einander gegenüberliegenden Seiten jeweils eine Schwenkschraube 105a angeordnet, so dass durch Verschrauben einer der beiden ein Verschwenken des Prismenkörpers um die X-Achse durchgeführt werden kann.

Dabei ist die exakte Position der X-Achse nicht festgelegt, sondern sie befindet sich im Bereich zwischen den beiden Schwenkschrauben 105a.

Zum Verschwenken um die Y-Achse ist sogar nur eine Schwenkschraube 105b auf nur einer Seite der (ebenfalls nicht exakt festgelegten) Y-Achse angeordnet, was jedoch hierfür ausreichend ist.

Werden dagegen alle Schwenkschrauben 105a, b in die gleiche Richtung verschraubt, so wird dadurch der Abstand zwischen den Scheiben 107, 107' vergrößert oder verkleinert und dadurch in Z-Richtung die Höhenlage des Fokuspunktes des Laserstrahls bezüglich der Kartenoberfläche verstellt.

Diese Scheibe 107 ist das Fixierteil 102b der Prismenfassung 102 und besitzt eine umlaufende, in diesem Fall ringförmige Stirnfläche oder Schulter 108, mit der es in einem ringförmigen Gehäuse 110 aufgenommen werden kann. Das Gehäuse 110 ist in diesem Fall Bestandteil des Grundgestells 17 der gesamten Maschine und darüber hinaus insbesondere nicht ein einstückig geschlossener Ring, sondern ein aus zwei Segmenten, nämlich den Gehäuseteilen 110a, b bestehendes Gehäuse.

Der Fixierteil 102b wird in das eine Gehäuseteil 110a eingeschoben und durch den dagegen verschraubten zweiten Gehäuseteil 110b fixiert.

Fig. 5a zeigt die beiden Umlenkspiegeleinheiten 100, von denen eine oberhalb und eine unterhalb der Mittel-Hauptebene 200', also der Kartenebene, angeordnet ist sowie die relevanten Teile des Grundgestells 17 der Maschine in Explosionsdarstellung.

Dort ist zu erkennen, dass das Fixierteil 102b nach Einsetzen über die vertikalen Schrauben im äußeren Ringbereich gegenüber dem Gehäuse 110a/b verschraubt wird.

Dennoch ist ein Verdrehen der Prismenfassung 102 und damit des Prismenkörpers 101 um die Rotationsachse des ringförmigen Gehäuses 110 geringfügig möglich, indem die tangential im Gehäuse 110 angeordneten Drehschrauben 109a,b vorwärtsgeschraubt werden und in Umfangsrichtung gegen die Prismenfassung 102 oder das Fixierteil 102a der Prismenfassung drücken und diese leicht verdrehen.

### BEZUGSZEICHENLISTE

- 1: Laserquelle
- 2: Optik
- 3: Fächerspiegel
- 4: Kartenschlitten
- 6, 6': Reflektionsfläche
- 7, 7': Reflektionsfläche
- 8, 8': Reflektionsfläche
- 9: Auswahlspiegel
- 10: Strahlengang, Laserstrahl
- 10': Strahlfächer
- 12a, b: Führung
- 13: elektronischen Beschriftungseinheit
- 14: Schrägprisma
- 15: Absaugvorrichtung
- 16: Aktivkohle-Filter
- 17: Grundgestell
- 19: CCD-Chip
- 21: Schwenkachse
- 27: Einführschlitz
- 28: Seitenwand
- 29: Magnet

- 100: Umlenkspiegel-Einheit
- 100': Hauptebene
- 101: Prismenkörper
- 102: Prismenfassung
- 102a: Prismenteil
- 102b: Fixierteil
- 103a,b,c: Umlenkebene
- 104a,b: Klappwinkel
- 105a,b: Schwenkschraube
- 106: Feder
- 107, 107': Scheibe
- 108: Schulter
- 109a,b: Drehschraube
- 110: Gehäuse
- 110a,b: Gehäuseteil
- 111: Mittelpunkt
- 113: Durchtrittsöffnung
- 116: Haltenase
- 117: Befestigungsschraube
- 118: Anschlag

- a, b: Kathete
- c: Hypotenuse

- 200: Karte
- 200a: Oberseite
- 200b: Unterseite
- 200': Hauptebene, Mittel-Hauptebene
- 201: Magnetstreifen
- 202: Vorbedruckung
- 203: Chip

## Patentansprüche

1. Umlenkspiegeleinheit (100) für drei optische Strahlumlenkungen eines Laserstrahls (10), mit
- einem einzigen Prismenkörper (101) mit drei Reflektionsflächen (6, 7, 8), die Totalreflektion aufweisen, und dessen Hauptebene (100') durch alle drei Reflektionsflächen (6, 7, 8) verläuft,
- einer Prismenfassung (102) zur Aufnahme des Prismenkörpers (101),
- einem die Prismenfassung (102) aufnehmendem Gehäuse (110), **dadurch gekennzeichnet, dass**
- die durch den ein- und ausgehenden Strahl (10) bei jeder Umlenkung definierten Umlenkebenen (103a,b,c) der drei Umlenkungen je zwei benachbarte Umlenkebenen (z. B. 103a, 103b) unter einem Klappwinkel (104a,b), insbesondere von jeweils 90°, zueinander angeordnet sind,
- Schwenkelemente, insbesondere Schwenkschrauben (105a,b), vorhanden sind zum Verschwenken der Prismenfassung (102) um die beiden Aufspannrichtungen, insbesondere die X- und Y-Richtung, der Hauptebene (100') des Prismenkörpers (101) relativ zum Gehäuse (110).

2. Umlenkspiegeleinheit (100) nach Anspruch 1,
**dadurch gekennzeichnet, dass**
die Prismenfassung (102) aus zwei zueinander beweglichen Teilen, dem den Prismenkörper (101) aufnehmenden Prismenteil (102a) und dem am Gehäuse (110) fixierten, insbesondere direkt fixierten, Fixierteil (102b), besteht und die Schwenkelemente dazwischen angeordnet sind, sodass sie die beiden Teile (102a,b) relativ zueinander verschwenken können.

3. Umlenkspiegeleinheit (100) nach einem der vorhergehenden Ansprüche,
**dadurch gekennzeichnet, dass**
zwischen Prismenteil (102a) und Fixierteil (102b) Federn (106), insbesondere Zugfedern, angeordnet sind, die die beiden Teile (102a,b) in einer Vorspannung zueinander halten.

4. Umlenkspiegeleinheit (100) nach einem der vorhergehenden Ansprüche,
**dadurch gekennzeichnet, dass**
- die Schwenkelemente, insbesondere Schwenkschrauben, quer zur Hauptebene (100') des Prismenkörpers verlaufen und zum Verschwenken um eine Richtung, etwa die X-Richtung, wenigstens ein Schwenkelement, insbesondere Schwenkschraube (105a) beabstandet von dieser Schwenkachse oder zwei Schwenkelemente auf einander gegenüberliegenden Seiten dieser Schwenkachse angeordnet sind, und/oder
- durch Verstellen aller Schwenkelemente, insbesondere Schwenkschrauben (105a, b) in die gleiche Richtung, Fixierteil (102b) und Prismenteil (102a) der Prismenfassung (102) im Abstand zueinander verändert werden können zwecks Einstellung der Höhe des Fokuspunktes des Laserstrahls in Richtung lotrecht zur Hauptebene (100') des Prismenkörpers (101).

5. Umlenkspiegeleinheit (100) nach einem der vorhergehenden Ansprüche,
**dadurch gekennzeichnet, dass**
- das Fixierteil (102b) eine Scheibe (107) oder ein Ring mit rundem Außenumfang ist und das aufnehmende Gehäuse (110) an dem Außenumfang wenigstens über Umfangssegmente anliegt, und/oder
- das runde Fixierteil (102b) eine Radialfläche insbesondere eine umlaufende Schulter (108), besitzt, mit der es auf dem Gehäuse (110) aufliegt, und/oder
- zwischen dem runden Fixierteil (102b) und dem Gehäuse (110) Drehelemente, insbesondere Drehschrauben (109a,b), vorhanden sind, die das Fixierteil (1 02b) gegenüber dem Gehäuse (110) verdrehen können, und/oder
- die Stellelemente und/oder Dreheelemente selbsthemmend ausgebildet sind.

6. Umlenkspiegeleinheit (100) nach einem der vorhergehenden Ansprüche,
**dadurch gekennzeichnet, dass**
- das Gehäuse (110) zweiteilig ausgebildet ist und am runden Fixierteil (102b) mit jedem seiner Gehäuseteile (110a, b) insbesondere über maximal 180° des Umfanges anliegt und die beiden Gehäuseteile (110a,b) insbesondere gegeneinander verschraubt sind, und/oder
- das runde Fixierteil (102b) parallel zur Hauptebene (100') des Prismenkörpers (101) versetzt über dem Prismenkörper (101) angeordnet ist, und/oder
- der Prismenkörper (101) in der Aufsicht auf die Hauptebene betrachtet ein rechtwinkliges Dreieck ist, dessen Hypotenuse (c) insbesondere unter einem Winkel von jeweils 45° zu den beiden Katheten (a, b) liegt, und bei dem insbesondere wenigstens eine Ecke abgeschnitten ist.

7. Umlenkspiegeleinheit (100) nach einem der vorhergehenden Ansprüche,
**dadurch gekennzeichnet, dass**
- die Hypotenuse (c) unter dem runden Fixierteil (102b) verläuft und insbesondere unter deren Mittelpunkt (111), und/oder
- das Fixierteil (102b) gegenüber dem Gehäuse (110) verschraubt ist mittels Fixierschrauben (112), die das Fixierteil (102b) durch gegenüber den Fixierschrauben (112) größere Durchgangs-Öffnungen verlaufen.

8. Umlenkspiegeleinheit (100) nach einem der vorhergehenden Ansprüche,
**dadurch gekennzeichnet, dass**
- die Prismenfassung (102) wenigstens eine Durchtrittsöffnung (113) im Bereich des eintretenden und austretenden Laserstrahls (10) aufweist und eine quer zur Hauptebene stehende Einschuböffnung (114), die insbesondere eine Kathete (b) des Dreiecks ist, und/oder
- in der Prismenfassung (102) oder im Gehäuse (110) eine die Durchtrittsöffnung (113) abdeckende, durchsichtige Abdeckung vorhanden ist, die ein Verschmutzen der Oberfläche des Prismenkörpers (101) in diesem Bereich verhindert und die Abdeckung insbesondere auswechselbar ist, und/oder
- die Prismenfassung (102) und/oder das Gehäuse (110) aus Kunststoff besteht.

9. Umlenkspiegeleinheit (100) nach einem der vorhergehenden Ansprüche,
**dadurch gekennzeichnet, dass**
- der Prismenkörper (101) in der Prismenfassung (102) spielfrei aufgenommen ist, und/oder
- der Prismenkörper (101) in der Prismenfassung (102) formschlüssig gehalten ist, insbesondere ausschließlich formschlüssig gehalten ist.

10. Umlenkspiegeleinheit (100) nach einem der vorhergehenden Ansprüche,
**dadurch gekennzeichnet, dass**
- die Prismenfassung (102) wenigstens eine Kontrollöffnung (113) abseits der Durchtrittsöffnungen aufweist, durch die hindurch der Verlauf des Laserstrahls einsehbar ist und am Rand der Kontrollöffnung an der Prismenfassung (102) Einstellmarkierungen vorhanden sind, und/oder
- die Prismenfassung (102) wenigstens eine Federzunge (115) aufweist, welche den Prismenkörper (101) gegen einen definierten Anschlag (118) der Prismenfassung (102), insbesondere quer zur Hauptebene (100'), drückt.

11. Laserbeschriftungsvorrichtung für beide Seiten einer Karte (200), deren Hauptebene (200') sich in X- und Y-Richtung erstreckt, mit
- einem Grundgestell (17),
- einer Laserquelle (1),
- einer die Laserquelle (1) fokussierenden Optik (2),
- einem oszillierend in Y-Richtung, insbesondere nur in Y-Richtung, hin-und herschwenkenden Fächerspiegel (3) im Strahlengang des Laserstrahls (10),
- die Laserquelle (1) den Laserstrahl (10) in einer Richtung parallel, insbesondere auf der Mittel-Hauptebene (200') des Kartenschlittens (4) abgibt,
- im Strahlengang des Lasers (10) auf der gleichen Seite der Mittel-Hauptebene (200') drei stillstehende Reflektionsflächen (6, 7, 8, 6', 7', 8') für den Laserstrahls (10) angeordnet sind,
**dadurch gekennzeichnet, dass**
- die drei stillstehende Reflektionsflächen (6, 7, 8, 6', 7', 8') durch eine Umlenkspiegeleinheit (100) nach einem der vorhergehenden Ansprüche realisiert ist und
- deren Gehäuse (110) Bestandteil, insbesondere einstückiger Bestandteil, des Grundgestells (17) ist.

12. Laserbeschriftungsvorrichtung nach Anspruch 11,
**dadurch gekennzeichnet, dass**
- nur eines der Gehäuseteile (110a) einstückiger Bestandteil des Grundgestells (17) ist, und/oder
- auf jeder Seite der Kartenhauptebene (200') und insbesondere symmetrisch hierzu je eine Umlenkspiegeleinheit (100) vorhanden ist.

13. Laserbeschriftungsvorrichtung nach einem der vorhergehenden Vorrichtungsansprüche,
**dadurch gekennzeichnet, dass**
- der in Y-Richtung auf der Kartenoberfläche (200a, b) oszillierende Laserstrahl (10) immer auf die gleiche X-Position der Vorrichtung gerichtet ist,
- einem parallel zur X-Richtung gesteuert verfahrbaren Kartenschlitten (4),
- einer Steuerung (5) der Vorrichtung, die die X-Bewegung des Kartenschlittens (4) sowie die Auslösung eines Laserschusses in Abhängigkeit von der Winkelstellung des Fächerspiegels (3) und der X-Position des Kartenschlittens (4) steuert.

14. Laserbeschriftungsvorrichtung nach einem der vorhergehenden Vorrichtungsansprüche,
**dadurch gekennzeichnet, dass**
- der Kartenschlitten (4) ausschließlich randseitige Aufnahmen (4a, b) für die Karte (200) aufweist,
- ein zwischen zwei Positionen für Oberseite (200a) und Unterseite (200b) der Karte (200) hin und her schwenkbarer Auswahl-Spiegel (9) vor den still stehenden Reflektionsflächen (6, 6'..) im Strahlengang (10) des Lasers (1) so angeordnet ist, dass der Laserstrahl wahlweise auf die eine oder die andere Seite bezüglich der Hauptebene (200') des Kartenschlittens (4) und die dortigen Reflektionsflächen (6...6') gelenkt wird.

15. Laserbeschriftungsvorrichtung nach einem der vorhergehenden Vorrichtungsansprüche,
**dadurch gekennzeichnet, dass**
- der Auswahlspiegel (9) um 90° zwischen den beiden Positionen verschwenkbar ist und insbesondere der Auswahlspiegel (9) um eine in Y-Richtung laufende Schwenkachse neben dem Kartenschlitten (4) angeordnet ist, und/oder
- die Optik (2) für den Laserstrahl (10) im Strahlengang nach dem Fächerspiegel (3) und vor dem Auswahlspiegel (9) angeordnet ist.

16. Laserbeschriftungsvorrichtung nach einem der vorhergehenden Vorrichtungsansprüche,
**dadurch gekennzeichnet, dass**
- die drei Reflektionsflächen (6, 7, 8) die gleichen Reflexionsbedingungen, insbesondere jeweils eine Strahlumlenkung um 90°, besitzen, und/oder
- die Vorrichtung - insbesondere auf jeder Seite der Hauptebene (200') des Kartenschlittens (4) - ein Schrägprisma (14) zum schrägen Auftreffen des Laserstrahls (10) auf der Kartenoberfläche (200a, b) oder einen Schrägspiegel umfasst, die beweglich so angeordnet sind, dass sie in und aus dem Strahlengang des Laserstrahls (10) verfahren werden können, und/oder
- das Schrägprisma (14) zwischen dem letzten fest montierten Umlenkspiegel (8, 8') und dem Kartenschlitten (4) im Strahlengang positioniert werden kann.

## Geänderte Patentansprüche

### Geänderte Patentansprüche gemäss Regel 137(2) EPÜ.

**1.** Laserbeschriftungsvorrichtung zum Beschriften beider Seiten einer Karte (200), wobei die Karte eine Hauptebene (200') hat, die sich in X- und Y-Richtung erstreckt, mit
- einem Grundgestell (17),
- einer Laserquelle (1),
- einer die Laserquelle (1) fokussierende Optik (2),
- einem Kartenschlitten (4), der eine Mittel-Hauptebene (200') für eine in den Kartenschlitten eingelegte Karte (200) bestimmt, die durch die X- und Y- Richtung definiert ist, wobei
- der Kartenschlitten (4) ausschließlich randseitige Aufnahmen (4a, b) für die Karte (200) aufweist,
- einem oszillierend in Y-Richtung hin- und herschwenkenden Fächerspiegel (3) im Strahlengang des Laserstrahls (10), wobei
- die Laserquelle (1) einen Laserstrahl (10) in einer Richtung parallel der Mittel-Hauptebene (200') des Kartenschlittens (4) abgeben kann,
- im Strahlengang des Laserstrahls (10) auf jeder Seite der Mittel-Hauptebene (200') drei stillstehende Reflektionsflächen (6, 7, 8, 6', 7', 8') für den Laserstrahls (10) angeordnet sind,
- die drei stillstehenden Reflektionsflächen (6, 7, 8, 6', 7', 8') durch eine Umlenkspiegeleinheit (100) für drei optische Strahlumlenkungen eines Laserstrahl (10) realisiert sind, mit
- einem einzigen Prismenkörper (101) mit drei Reflektionsflächen (6, 7, 8) für drei Umlenkungen, die Totalreflektion aufweisen, wobei der Prismenkörper (101) eine Hauptebene (100') hat, die durch alle drei Reflektionsflächen (6, 7, 8) verläuft,
- einer Prismenfassung (102) zur Aufnahme des Prismenkörpers (101),
- einem die Prismenfassung (102) aufnehmendem Gehäuse (110), wobei die Umlenkebenen so zueinander angeordnet sind, dass die durch den ein- und ausgehenden Strahl (10) bei jeder Umlenkung definierten Umlenkebenen (103a,b,c) der drei Umlenkungen je zwei benachbarte Umlenkebenen (z. B. 103a, 103b) unter einem Klappwinkel (104a,b) zueinander angeordnet sind, wobei die Hauptebene (100') des Prismenkörpers durch zwei Aufspannrichtungen aufgespannt ist,
- Schwenkelemente vorhanden sind zum Verschwenken der Prismenfassung (102) um die beiden Aufspannrichtungen der Hauptebene (100') des Prismenkörpers (101) relativ zum Gehäuse (110), und
- deren Gehäuse (110) Bestandteil des Grundgestells (17) ist.

**2.** Laserbeschriftungsvorrichtung nach Anspruch 1,
**dadurch gekennzeichnet, dass**
- nur eines der Gehäuseteile (110a) einstückiger Bestandteil des Grundgestells (17) ist, und/oder
- auf jeder Seite der Kartenhauptebene (200') und insbesondere symmetrisch hierzu je eine Umlenkspiegeleinheit (100) vorhanden ist.

**3.** Laserbeschriftungsvorrichtung nach einem der vorhergehenden Vorrichtungsansprüche,
**dadurch gekennzeichnet, dass**
- der in Y-Richtung auf der Kartenoberfläche (200a, b) oszillierende Laserstrahl (10) immer auf die gleiche X-Position der Vorrichtung gerichtet ist,
- einem parallel zur X-Richtung gesteuert verfahrbaren Kartenschlitten (4),
- einer Steuerung (5) der Vorrichtung, die die X-Bewegung des Kartenschlittens (4) sowie die Auslösung eines Laserschusses in Abhängigkeit von der Winkelstellung des Fächerspiegels (3) und der X-Position des Kartenschlittens (4) steuert.

**4.** Laserbeschriftungsvorrichtung nach einem der vorhergehenden Vorrichtungsansprüche,
**dadurch gekennzeichnet, dass**
- ein zwischen zwei Positionen für Oberseite (200a) und Unterseite (200b) der Karte (200) hin und her schwenkbarer Auswahl-Spiegel (9) vor den still stehenden Reflektionsflächen (6, 6'..) im Strahlengang (10) des Lasers (1) so angeordnet ist, dass der Laserstrahl wahlweise auf die eine oder die andere Seite bezüglich der Hauptebene (200') des Kartenschlittens (4) und die dortigen Reflektionsflächen (6...6') gelenkt wird.

**5.** Laserbeschriftungsvorrichtung nach Anspruch 4
**dadurch gekennzeichnet, dass**
- der Auswahlspiegel (9) um 90° zwischen den beiden Positionen verschwenkbar ist und insbesondere der Auswahlspiegel (9) um eine in Y-Richtung laufende Schwenkachse neben dem Kartenschlitten (4) angeordnet ist, und/oder
- die Optik (2) für den Laserstrahl (10) im Strahlengang nach dem Fächerspiegel (3) und vor dem Auswahlspiegel (9) angeordnet ist.

**6.** Laserbeschriftungsvorrichtung nach einem der vorhergehenden Vorrichtungsansprüche,
**dadurch gekennzeichnet, dass**
- die drei Reflektionsflächen (6, 7, 8) die gleichen Reflexionsbedingungen, insbesondere jeweils eine Strahlumlenkung um 90°, besitzen, und/oder
- die Vorrichtung - insbesondere auf jeder Seite der Hauptebene (200') des Kartenschlittens (4) - ein Schrägprisma (14) zum schrägen Auftreffen des Laserstrahls (10) auf der Kartenoberfläche (200a, b) oder einen Schrägspiegel umfasst, die beweglich so angeordnet sind, dass sie in und aus dem Strahlengang des Laserstrahls (10) verfahren werden können, und/oder
- das Schrägprisma (14) zwischen dem letzten fest montierten Umlenkspiegel (8, 8') und dem Kartenschlitten (4) im Strahlengang positioniert werden kann.
